# FASCICULE DE BREVET EUROPEEN

(11) **EP 0 582 531 B1**
(45) Date de publication et mention de la délivrance du brevet: **24.09.1997**
(21) Numéro de dépôt: 93440059.9
(22) Date de dépôt: 30.07.1993
(51) Int. Cl.: G01M 3/28

(54) **Procédé de test d'étanchéité d'une canalisation ou d'un réseau de canalisations ainsi qu'une installation permettant la mise en oeuvre de ce procédé**
Verfahren zum Prüfen der Dichtigkeit einer Kanalisation oder eines Kanalisationsnetzes sowie eine Anlage zur Durchführung des Verfahrens
Method for testing the tightness of a drain channel or a network of drain channels and installation for carrying out the method

(30) Priorité: 03.08.1992 FR 9209752
(43) Date de publication de la demande: 09.02.1994
(73) Titulaire: CONSTRUCTIONS SEWERIN MATERIEL RESEAUX CMR SMR S.A., F-67000 Strasbourg (FR)
(72) Inventeur: Reiller, Jean-Daniel, F-67400 Illkirch-Graffenstaden (FR)
(74) Mandataire: Rhein, Alain

(56) Documents cités:
- WO-A-87/05105
- DE-C- 3 905 054
- DE-U- 9 103 870
- GB-A- 2 167 829
- GB-A- 2 220 075
- US-A- 4 402 213
- US-A- 5 078 006
- PATENT ABSTRACTS OF JAPAN vol. 12, no. 368 (P-766) 4 Octobre 1988 & JP-A-63 120 237 (NIPPON SUTANDO SERVICE KK) 24 Mai 1988
- PATENT ABSTRACTS OF JAPAN vol. 17, no. 481 (P-1604) 31 Août 1993 & JP-A-05 118 951 (NAKAMURA KINZOKU KOGYOSHO KK) 14 Mai 1993
- PATENT ABSTRACTS OF JAPAN vol. 17, no. 389 (M-1449) 21 Juillet 1993 & JP-A-05 069 882 (ISHIKAWAJIMA HARIMA HEAVY IND CO LTD) 23 Mars 1993

## Description

L'invention concerne un procédé de test d'étanchéité d'une canalisation ou d'un réseau de canalisations, ainsi qu'une installation permettant la mise en oeuvre de ce procédé, conformes au préambule des revendications 1 et 4.

La présente invention trouvera son application dans tous les domaines dans lesquels il convient de tester l'étanchéité d'une canalisation ou d'un réseau de canalisations quel que soit le fluide véhiculé.

Ainsi, cette invention trouvera tout particulièrement son utilité dans le cadre de la détermination de l'étanchéité des canalisations enterrées telles que celles correspondant aux réseaux d'assainissement.

Le test d'étanchéité de canalisations est réalisé, à l'heure actuelle, au moyen de deux procédés dont l'un est plus conventionnel que l'autre. Ainsi, le procédé le plus communément utilisé, en raison des résultats plus significatifs qu'il procure, est un procédé de test à l'eau consistant à injecter, dans un tronçon de canalisation dont on aura préalablement obturé les extrémités, de l'eau à une pression de l'ordre de 0,4 à 0,5.10⁵ Pa puis à déterminer le débit de fuite en mesurant, plus précisément, l'apport d'eau nécessaire pour le maintien de la pression.

L'on comprend bien que ce procédé de test est d'exécution particulièrement lourde et coûteuse dans la mesure où, s'agissant, par exemple, d'un tronçon de canalisation de gros diamètre, telle qu'une canalisation d'assainissement, il y a lieu, avant d'effectuer les mesures, de remplir ce tronçon totalement d'eau, ce qui représente une quantité importante. Par ailleurs, cette eau ne pouvant être évacuée que par la canalisation elle-même, ces tests d'étanchéité à l'eau ne peuvent être menés qu'une fois le réseau de canalisations totalement terminé. Ainsi, aucun test systématique conjointement à la pose de la canalisation n'est possible, ce qui a pour inconvénient de compliquer le travail aux installateurs lesquels ne peuvent intervenir immédiatement après la pose d'un tronçon de canalisation, au niveau de la fuite éventuelle que présente ce tronçon.

Un autre inconvénient de ce procédé de test d'étanchéité à l'eau consiste en ce que les temps, d'une part, d'imprégnation des canalisations, lorsqu'elles sont en matériau poreux, par exemple en béton et, d'autre part, de mesure sont très longs. A ce propos, il convient de rappeler l'une des méthodes de mesure habituellement mise en oeuvre. Ainsi, si l'on prend le cas d'une canalisation enterrée, sensiblement horizontale, celle-ci communique, à un moment donné, avec un regard qui est débouchant à la surface du sol. Pour procéder au test de l'étanchéité à l'eau d'un tronçon de canalisation, on obture ses extrémités et on assure son remplissage d'eau par l'intermédiaire du regard. Par le biais d'un tube vertical rempli d'eau et communiquant avec le tronçon de canalisation à tester, l'on maintient, par apport d'eau complémentaire la hauteur de la colonne d'eau et donc, le niveau constant dans le tube. Ces apports ne doivent pas être supérieurs à une quantité prédéterminée par rapport à un temps donné.

L'on comprend bien que cette opération ne peut être effectuée instantanément ce qui conduit, nécessairement, à un temps particulièrement long, soit de l'ordre de 27 heures dans le cas d'une canalisation en béton.

L'eau, en dehors du fait que son apport contribue à une augmentation du coût de ce test d'étanchéité d'une canalisation, présente un autre inconvénient qui est celui de ne pas être disponible, systématiquement, sur les lieux du test. Ainsi, il est fréquent d'acheminer cette eau par l'intermédiaire de citernes, ce qui, naturellement, ne fait qu'accroître le coût de revient total du test.

Quant à l'autre procédé de test d'étanchéité également connu à ce jour mais utilisé d'une manière moins conventionnelle, il s'agit d'un procédé de mesure à l'air plus particulièrement décrit dans le document WO-A-8.705.105. Ce procédé consiste à injecter dans une canalisation, dont on aura préalablement obturé les extrémités, de l'air sous une pression relativement importante soit de l'ordre de 0,4.10⁵ Pa. Ensuite, l'on mesure le temps qu'il faut à cette pression pour chuter entre un premier et un second palier, sachant que si ce temps est inférieur à une valeur seuil, l'on considère la canalisation comme non étanche. Ainsi, afin de connaître cette valeur seuil du temps de chute de la pression, l'on se reporte, à des abaques tenant compte de différents paramètres variables, tels que la section de la canalisation le matériau et la longueur. En fait, l'inconvénient lié à ce procédé de test à l'air connu réside en ce que la mesure effectuée ne permet pas de déterminer, précisément, l'importance de la fuite mais simplement, de dire que le temps mesuré est au-dessus ou en-dessous d'une valeur seuil retrouvée dans des abaques et, par conséquent, que la canalisation est ou non étanche ou, tout au plus, dans des conditions d'étanchéité limites.

En effet, ce procédé fait intervenir, en cours de mesure, deux variables, à savoir la pression et le débit de fuite. Aussi, les résultats de ce test à l'air à pression décroissante ne peuvent être rapprochés à une mesure déterminée selon le procédé de test à l'eau qui est le test de référence. Ainsi, il est difficile de définir l'équation permettant de déterminer, partant d'une mesure de test à l'air, son équivalent correspondant à une mesure de test à l'eau.

En outre, l'on comprend bien qu'il est essentiellement choisi une pression élevée, dans le cadre de ce procédé de test d'étanchéité à l'air, en vue d'obtenir un gradient de pression signiticatif. En effet, là encore, une mesure instantanée n'est pas envisageable.

Cependant, cette pression de mesure élevée conduit à une limitation de l'application de ce procédé de test à l'air à des canalisations continues, c'est-à-dire non interrompues par un quelconque regard. En effet, une pression de l'ordre de 0,4.10⁵ Pa dans un regard génère des dégradations au niveau du regard même. Cela pose, en outre, un problème général de sécurité dans la mesure où la moindre défaillance d'un obturateur peut conduire, dans le cas d'air sous pression, à des incidents, particulièrement graves.

A noter, que, selon le document antérieur précité, il est possible de tester l'étanchéité d'un regard et donc de résoudre les problèmes, d'une part, d'étanchéité d'un tel regard en cours de test et, d'autre part, de sécurité en cas de rupture, en travaillant sous une pression négative. Cependant, une telle solution ne peut, raisonnablement, pas être retenue. En effet, la création d'un vide dans les canalisations, qui doit être relativement important pour permettre une mesure à pression croissante, a pour conséquence, de soumettre ces canalisations à des contraintes, notamment radiales, inverses par rapport à celles qu'on leur demande de supporter en cas d'utilisation normale et pour lesquelles elles ont été conçues.

Par conséquent, ce procédé de test à l'air n'est applicable, notamment dans le cadre de canalisations enterrées, qu'à des tronçons de canalisations séparant deux regards consécutifs et non à un réseau de canalisations.

On notera, au passage, que le procédé de test à l'eau ne procure pas, non plus, de résultats efficaces en ce qui concerne le test d'étanchéité des regards. En effet, la pression est variable à l'intérieur de ces derniers. Ainsi, si l'on fait abstraction de la pression atmosphérique en surface du regard, cette pression est nulle à ce niveau, tandis qu'à hauteur de la jonction avec la canalisation, elle est proportionnelle à la hauteur de la colonne d'eau précisément procurée par la hauteur de ce regard. Par conséquent, l'on ne pourra pas déterminer, par ce procédé, si la partie supérieure d'un regard est ou non étanche.

En conclusion, la présente invention a pour but de remédier à l'ensemble des inconvénients du procédé de test à l'eau et du procédé de test à l'air actuellement utilisés, tout en retenant les avantages découlant de l'un ou l'autre de ces procédés.

Ainsi, le procédé selon l'invention se veut souple par l'usage d'un fluide gazeux tout en étant apte à conduire à des mesures significatives autorisant la corrélation avec le test à l'eau, ceci, avec possibilité de sa mise en oeuvre à tout endroit d'un réseau de canalisations et, tout particulièrement, au niveau d'un regard qui, peut, ainsi, subir un test d'étanchéité. On remarquera, d'ailleurs, au passage, qu'en raison de cette caractéristique, il est effectivement possible de tester toute une partie d'un réseau de canalisations y compris les regards, alors que, selon les procédés de tests à l'air et à l'eau connus, seul un tronçon de canalisation continu était susceptible d'être vérifié.

Le procédé selon l'invention se veut également souple en ce qui concerne les moyens nécessaires pour sa mise en oeuvre.

Finalement, de par sa simplicité, mais aussi de son efficacité, de sa fiabilité et de sa facilité de mise en oeuvre, le procédé selon l'invention permet un contrôle systématique, préventif lors de la pose et/ou curatif lors de l'exploitation et particulièrement peu onéreux, de l'étanchéité d'une canalisation ou d'un réseau de canalisations. Ainsi, ce procédé peut être appliqué dès la mise en place de ces derniers, c'est-à-dire alors même qu'une réparation ou une intervention quelconque est susceptible d'être effectuée sans grande difficulté. Par conséquent, si en soi, le procédé, ainsi que l'installation permettant sa mise en oeuvre, autorisent un test d'étanchéité à moindres frais, le test systématique engendre, par ailleurs, une réduction du coût moyen de pose d'une canalisation ou d'un réseau de canalisations.

Ainsi, l'invention concerne un procédé de test d'étanchéité d'une canalisation ou d'un réseau de canalisations, caractérisé par le fait qu'après avoir délimité la canalisation ou le réseau de canalisations à tester à l'aide de moyens d'obturation, on injecte un fluide gazeux dans cette canalisation ou ce réseau de canalisation jusqu'à atteindre une pression P donnée, inférieure à 0,1.10⁵ Pa, de préférence entre 0,07 et 0,03.10⁵ Pa.

Par ailleurs, l'invention concerne une installation permettant la mise en oeuvre de ce procédé comprenant :
- des moyens d'obturation de la canalisation ou du réseau de canalisations à tester ;
- des moyens générateurs de fluide gazeux sous pression coopérant avec des moyens d'alimentation raccordés à au moins un des moyens d'obturation comportant un canal de passage de fluide gazeux pour établir une pression P dans cette canalisation ou ce réseau de canalisations à tester ;
- des moyens de mesure et de contrôle de la pression P ;
- des moyens de mesure de la température T à l'intérieur de la canalisation ou du réseau de canalisations ;
- le cas échéant, des moyens de mesure du débit d'apport de fluide gazeux issu des moyens générateurs pour le maintien de la pression P ;
- une unité de traitement des mesures de pression, température et débit effectués.

Selon une autre caractéristique de cette installation, elle comporte une unité centrale de traitement des mesures, de température, pression et débit effectuées.

L'invention est exposée ci-après plus en détail à l'aide de dessins représentant seulement un mode d'exécution.
- La figure 1 représente une vue schématisée de l'application du procédé et de l'installation, conformes à l'invention, à un réseau de canalisations enterrées.
- La figure 2 représente une vue schématisée du tuyau d'alimentation reliant la canalisation ou le réseau de canalisations à tester au boîtier central.
- La figure 3 représente une vue schématisée du boîtier central renfermant les moyens générateurs de fluide gazeux, ainsi que l'unité de traitement des mesures et ses différents périphériques.

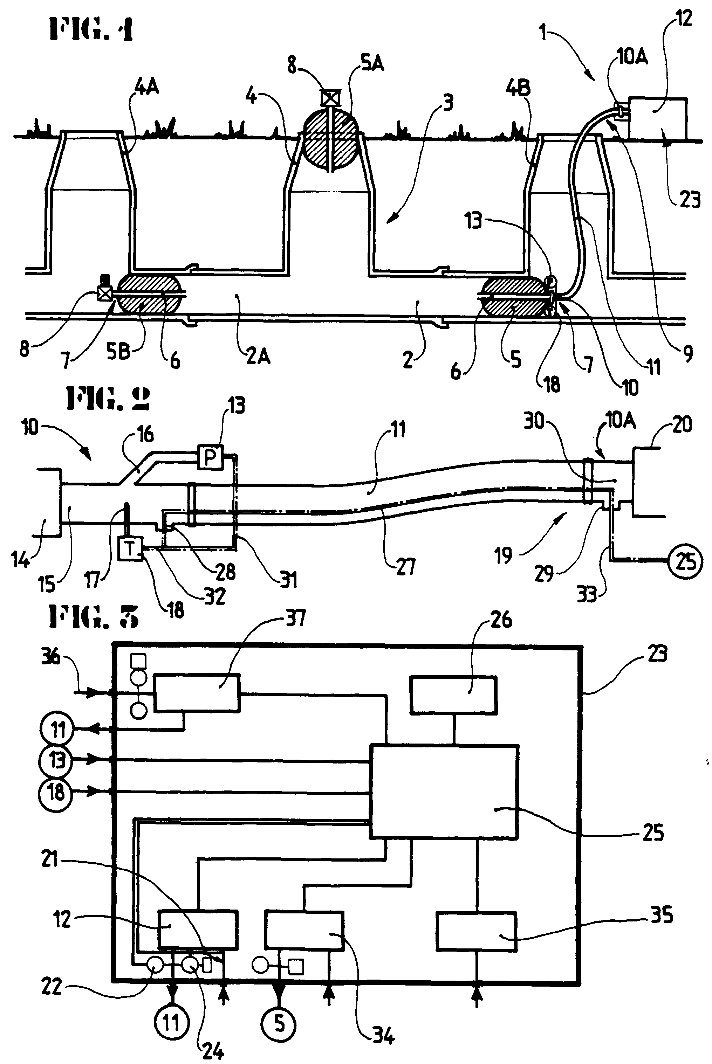

La présente invention concerne un procédé, mais également une installation pour le test d'étanchéité d'une canalisation 2, 2A ou d'un réseau de canalisations 3. Ainsi, tel que représenté dans la figure 1, il peut s'agir d'un réseau d'assainissement lequel se compose d'une succession de canalisations 2, 2A communiquant, de temps à autre, avec un ou plusieurs regards 4, 4A, 4B. Toutefois, la présente invention n'est nullement limitée à une telle application, puisqu'elle peut trouver son utilité dans tout autre type de canalisation ou réseau de canalisations dès l'instant qu'il s'agit d'en vérifier l'étanchéité.

En fait, le procédé de test consiste, tout d'abord, à délimiter la canalisation ou le réseau de canalisations 2, 2A, 4 par l'intermédiaire de moyens d'obturation 5, 5A, 5B. En ce qui concerne ces derniers, il s'agit de moyens d'obturation classiques, de type ballons qui, en se gonflant, se plaquent contre les parois d'une canalisation 2, 2A ou d'un regard 4 de manière à obturer ceux-ci. A noter que ces ballons comportent, fréquemment, un canal de passage de fluide gazeux 6 qui, selon le cas, est simplement obturé et reçoit, de son côté 7 externe à la canalisation ou au réseau de canalisations à tester, une soupape de sécurité ou une vanne 8. Bien sûr, à l'extrémité externe 7 du canal 6 de passage de fluide gazeux correspondant à un ballon 5, au moins, sont raccordés des moyens d'alimentation en fluide gazeux 9. Ainsi, à cette extrémité externe 7 du canal 6 correspondant au ballon 5 concerné sont aménagés des moyens de raccordement, par exemple, de type baïonnette, susceptibles de coopérer avec des moyens de raccordement conjugués 10 d'un tuyau d'alimentation 11 relié à des moyens générateurs de fluide gazeux sous pression 12.

Une fois la canalisation ou le réseau de canalisations 2, 2A, 4, parfaitement délimités par l'intermédiaire des moyens d'obturation 5, 5A, 5B, et le raccordement effectué, au niveau de l'un de ces moyens d'obturation 5, du tuyau d'alimentation 11 relié au moyen générateur du fluide gazeux sous pression 12, l'on injecte, précisément, du fluide gazeux dans ladite canalisation ou le réseau de canalisations 2, 2A, 4 à tester, jusqu'à atteindre une pression P donnée. A noter que l'évolution de cette pression dans le réseau de canalisations à tester s'effectue au moyen d'un capteur de pression 13. De manière à simplifier la conception de l'installation 1, ce capteur de pression 13 est associé aux moyens d'alimentation en fluide gazeux sous pression 9. Toutefois, pour obtenir une mesure fiable, il est important de placer ce capteur de pression 13 le plus éloigné possible des moyens générateurs de fluide gazeux sous pression 12 et, de préférence, aussi près que possible du milieu à tester.

Dans ce but et selon l'invention, ce capteur de pression 13 équipe le tuyau d'alimentation 11 et se situe, au plus près, des moyens de raccordement 10.

Selon un mode de réalisation préférentiel, ces moyens de raccordement 10, en dehors d'un raccord 14, par exemple du type baïonnette, comporte un manchon tubulaire 15 présentant, sur sa périphérie, au moins deux piquages 16, 17 pour la réception du capteur de pression 13, mais aussi d'un capteur de température 18. Il est évident, en effet, que pour l'interprétation des mesures effectuées, il faut tenir compte de cette température du fluide gazeux dans le milieu testé. Sur ce manchon tubulaire 15 est, ensuite, fixé le tuyau d'alimentation 11 lequel peut également comporter, à son extrémité amont 19, un raccord 20 similaire au raccord 14.

Le procédé de test, selon l'invention, peut consister en une mesure à pression décroissante. Ainsi, après avoir injecté dans la canalisation ou le réseau de canalisations à tester du fluide gazeux jusqu'à atteindre une pression P donnée, on regarde l'évolution de cette pression au cours du temps. De sorte que si, pour un temps donné, la baisse de la pression est supérieure à une valeur acceptable, l'on peut considérer que la canalisation ou le réseau de canalisations n'est pas étanche.

Selon un mode de réalisation préférentiel de l'invention, le procédé de test consiste en une mesure du débit de fuite à une pression constante. Ainsi, une fois la pression P atteinte dans le réseau de canalisations à tester on maintient cette pression P constante dans ledit réseau de canalisations au travers de moyens générateurs de fluide gazeux sous pression 12.

Selon une autre caractéristique de l'invention, la pression P à laquelle est soumis le réseau de canalisations, est choisie dans tous les cas inférieure à 0,1.10⁵ Pa et, de préférence, entre 0,07.10⁵ Pa et 0,03.10⁵ Pa.

Ainsi, une fois le processus en phase stable, l'on procède à la mesure du débit de fluide gazeux correspondant à cet apport nécessaire au maintien de la pression P et correspondant, elle-même, au débit de la fuite sous cette pression P. Cette mesure s'effectue, bien sûr, par l'intermédiaire d'un débitmètre 22 qui, dans le cadre du mode de réalisation représenté dans le dessin, est placé en sortie des moyens générateurs de fluide gazeux sous pression 12. A ce propos, l'on observera que si cette implantation du débitmètre 22 à proximité des moyens générateurs 12 présente l'avantage de pouvoir grouper l'ensemble dans un boîtier central 23 unique, elle impose, cependant, la correction de la mesure du débit, en raison d'une pression variable entre cette sortie des moyens générateurs 12 et la canalisation ou le réseau de canalisations à tester. Aussi, dans ce but, l'installation 1, conforme à l'invention, comportera, dans le cadre du mode de réalisation préférentiel illustré, également un capteur de pression 24 à hauteur du débitmètre 22 permettant de procéder aux corrections nécessaires.

A noter que ce type de corrections, ainsi que l'interprétation des mesures effectuées, sont assurés au moyen d'une unité de traitement 25 recueillant, précisément, l'ensemble des informations découlant des capteurs de pression 13 et 24, du capteur de température 18 ainsi que du débitmètre 22. Les résultats déterminés au travers de cette unité de traitement 25 sont retransmis par des moyens de visualisation 26 tels qu'un écran et/ou une imprimante qui peuvent ou non faire partie du boîtier central 23.

En fait, les avantages résultant de l'installation conformes à l'invention, sont liés à sa compacité. Ainsi, sachant que le test peut être effectué à basse pression, c'est-à-dire inférieure à 0,1.10⁵ Pa, de préférence entre 0,07 et 0.03.10⁵ Pa, les moyens générateurs de fluide gazeux sous pression 12 ne nécessitent qu'une moindre puissance et, par conséquent, sont de dimensions réduites. Notamment, dans le cadre d'une mesure à pression P constante, ils peuvent, ainsi, être disposés dans un boîtier central 23 lequel renferme, tel que déjà précisé plus haut, le débitmètre 22, mais également l'unité de traitement des mesures 25 ainsi que, éventuellement, des moyens de visualisation 26 des résultats communiqués au travers de cette unité de traitement 25. Ce boîtier central 23, somme toute de petite taille, est, ainsi, aisément transportable.

Par ailleurs, le tuyau d'alimentation 11 intègre, selon l'invention, soit dans l'épaisseur de sa paroi, soit dans sa partie interne, un cordon de raccordement électrique reliant des moyens de connexion mâle ou femelle 28, 29 implantés à hauteur des moyens de raccordement 10, 10A se situant aux extrémités de ce tuyau d'alimentation 11.

Ainsi, l'on trouve, en périphérie du manchon tubulaire 15 correspondant aux moyens de raccordement 10 mais encore sur le pourtour externe d'un embout tubulaire 30 prolongeant le raccord 20 et correspondant aux moyens de raccordement 10A, lesdits moyens de connexion respectivement 28, 29 susceptibles de recevoir des moyens de connexion conjugués 31, 32, correspondant au capteur de pression 13 et au capteur de température 18, respectivement, des moyens de connexion conjugués 33 solidaires d'un câble de raccordement relié, à l'unité de traitement 25. Ainsi, le cordon de raccordement 27, placé à l'intérieur du tuyau d'alimentation 11, est protégé à l'égard de toute dégradation possible sur les chantiers où s'effectuent, précisément, ces tests d'étanchéité. Cette configuration facilite, par ailleurs, les opérations de montage et démontage de l'installation 1.

Tel qu'illustré dans la figure 3, dans ce boîtier central 23, regroupant les principaux organes composant l'installation 1, peuvent, en outre, être implantés des moyens générateurs d'air comprimé 34 ayant pour fonction le gonflage des ballons constituant les moyens d'obturation 5, 5A, 5B. Bien sûr, ce boîtier central 23 est équipé de moyens de raccordement 35 à une alimentation électrique extérieure.

Finalement, pour autoriser la mise en oeuvre de cette installation dans le cadre d'un test d'étanchéité à l'eau, le boîtier central 23 peut, encore, être équipé de moyens de raccordement 36 à une alimentation en eau extérieure. Cette eau, au-delà, notamment, d'un capteur de pression et d'une boucle 37 de mesure du débit d'apport d'eau nécessaire au maintien d'une pression P constante dans le réseau de canalisations à tester, rejoint le tuyau d'alimentation 11, précisément, raccordé à ce réseau au travers du canal 6 d'un ballon 5.

De plus, ce boîtier central 23 est susceptible d'être équipé de moyens de raccordement 21 à des moyens générateurs de fluide gazeux sous pression extérieure aptes à pallier à une éventuelle insuffisance ou une défaillance des moyens générateurs 12 placés dans ce boîtier central 23.

Ainsi, la possibilité de travailler à une pression faible, par exemple de l'ordre de 0,05.10⁵ Pa, conduit à des moyens générateurs de fluide gazeux sous pression 12 de faible importance et, par conséquent, à une installation particulièrement compacte et légère. On comprend bien que, dans ces conditions, le procédé de test, conforme à l'invention, peut être mis en oeuvre de façon régulière autorisant un contrôle systématique, notamment en cours d'implantation d'un réseau de canalisations. A noter, en outre, tous les autres avantages liés à ce procédé et à cette installation conformes à l'invention, tel que la possibilité de tester l'étanchéité des regards 4, 4A, 4B que l'on retrouve notamment dans le cadre de réseaux d'assainissement, ou encore d'obtenir, dans le cadre de mesures à pression P constante, des résultats de tests comparables à ceux d'un test à l'eau.

Ainsi, l'invention contribue, de manière importante, au progrès de la technique dans ce domaine.

## Revendications

1. Procédé de test d'étanchéité d'une canalisation ou d'un réseau de canalisations consistant à délimiter, à l'aide de moyens d'obturation, ladite canalisation ou ledit réseau de canalisations à tester et à y injecter un fluide gazeux jusqu'à atteindre une pression P caractérisé par le fait que :
- l'on maintienne la pression P constante par apport de fluide gazeux à l'intérieur de ladite canalisation ou dudit réseau de canalisations à tester ;
- l'on mesure le débit d'apport de fluide gazeux nécessaire au maintien de ladite pression P ;
- ladite pression P est inférieure à 0,1.10⁵ Pa et de préférence comprise entre 0,03.10⁵ Pa et 0,07.10⁵ Pa.

2. Installation permettant la mise en oeuvre du procédé selon la revendication 1, caractérisée par le fait qu'elle comporte, en combinaison :
- des moyens d'obturation (5, 5A, 5B) de la canalisation ou du réseau de canalisations à tester ;
- des moyens générateurs (12) de fluide gazeux sous pression, coopérant avec des moyens d'alimentation (9) raccordés à au moins un des moyens d'obturation (5) comportant un canal (6) de passage de fluide gazeux, pour établir une pression P dans cette canalisation ou ce réseau de canalisations à tester ;
- des moyens de mesure (13) et de contrôle (24) de la pression P ;
- des moyens de mesure (18) de la température T à l'intérieur de la canalisation ou du réseau de canalisations ;
- le cas échéant, des moyens de mesure (22) du débit d'apport de fluide gazeux au travers des moyens générateurs (12) pour le maintien de la pression P dans la canalisation ou le réseau de canalisations à tester ;
- une unité de traitement (25) des mesures de pression, température et débit effectués.

3. Installation selon la revendication 2, caractérisée par le fait que les moyens d'alimentation (9) en fluide gazeux sont constitués par un tuyau d'alimentation (11) comportant, à ses extrémités, des moyens de raccordement (10, 10A) susceptibles de coopérer, respectivement, avec les moyens de raccordement correspondant à l'un au moins des moyens d'obturation (5, 5A, 5B) et les moyens de raccordement des moyens générateurs de fluide gazeux sous pression (12).

4. Installation selon la revendication 3, caractérisée par le fait que le tuyau d'alimentation (11) comporte des moyens de mesure (13) de la pression P, tel qu'un capteur de pression, ainsi que des moyens de mesure (18) de la température T, se situant au plus près, des moyens de raccordement (10) destinés à coopérer avec l'un au moins des moyens d'obturation (5, 5A, 5B).

5. Installation selon l'une des revendications 3 ou 4, caractérisée par le fait que le tuyau d'alimentation (11) intègre, soit dans l'épaisseur de sa paroi, soit dans sa partie interne, un cordon de raccordement électrique reliant des moyens de connexion mâle ou femelle (28, 29) implantés à hauteur des moyens de raccordement, respectivement (10, 10A), les moyens de connexion (28) recevant des moyens de connexion conjugués(31, 32) correspondant aux moyens de mesure (13) de la pression P et aux moyens de mesure (18) de la température T et les moyens de connexion (29) coopérant avec des moyens de connexion conjugués (33) solidaires d'un câble de raccordement relié à l'unité de traitement (25).

6. Installation selon l'une quelconque des revendications 2 à 5, caractérisée par le fait que les moyens de mesure du débit (22), tel qu'un débitmètre, ainsi qu'un capteur de pression (24) sont placés en sortie des moyens générateurs de fluide gazeux sous pression 12.

7. Installation selon les revendications 2 et 6, caractérisée par le fait qu'elle comporte un boîtier central (23) intégrant les moyens générateurs de fluide gazeux sous pression (12), les moyens de mesure du débit (22), le capteur de pression (24), l'unité de traitement (25), des moyens de visualisation (26) des résultats obtenus au travers de l'unité de traitement (25), ainsi que des moyens de raccordement (35) à une alimentation électrique extérieure.

8. Installation selon la revendication 7, caractérisée par le fait que le boîtier central (23) intègre, en outre, des moyens de mise en oeuvre d'un test d'étanchéité à l'eau, comprenant des moyens de raccordement (36) à une alimentation en eau extérieure, une boucle (37) de mesure du débit d'apport d'eau nécessaire au maintien d'une pression P dans la canalisation ou le réseau de canalisations à tester, et des moyens d'alimentation en eau de cette canalisation ou de ce réseau de canalisations constitué par le tuyau d'alimentation (11).

9. Installation selon la revendication 7, caractérisée par le fait que le boîtier central (23) renferme un générateur d'air comprimé (34) assurant le gonflage des ballons constituant les moyens d'obturation (5, 5A, 5B), et des moyens de raccordement (21) à des moyens générateurs de fluide gazeux sous pression extérieurs à ce boîtier central (23).

## Patentansprüche

1. Verfahren zum Prüfen auf Dichtigkeit einer Rohrleitung bzw. eines Rohrleitungennetzes, das darin besteht, die genannte, zu prüfende Rohrleitung bzw. das genannte, zu prüfende Rohrleitungennetz durch Verschlußmittel abzugrenzen und in dieselbe bzw. dasselbe ein gasförmiges Medium einzuspritzen, bis ein Druck P erreicht wird, dadurch gekennzeichnet, daß:
- der Druck P durch Zufuhr von gasförmigem Medium in das Innere der genannten, zu prüfenden Rohrleitung bzw. des genannten, zu prüfenden Rohrleitungennetzes konstant gehalten wird,
- die zur Aufrechterhaltung des genannten Drucks P erforderliche Gasmediumzufuhr-Durchflußmenge gemessen wird,
- der genannte Druck P niedriger als 0,1·10⁵ Pa ist und vorzugsweise zwischen 0,03·10⁵ Pa und 0,07·10⁵ Pa liegt.

2. Anlage, die die Anwendung des Verfahrens nach Anspruch 1 erlaubt, dadurch gekennzeichnet, daß sie in Kombination:
- Mittel (5, 5A, 5B) zum Verschließen der zu prüfenden Rohrleitung bzw. des zu prüfenden Rohrleitungennetzes,
- Mittel (12) zum Erzeugen von unter Druck stehendem, gasförmigem Medium, die mit Zufuhrmitteln (9) zusammenwirken, die an wenigstens einem der Verschlußmittel (5), das einen Gasmedium-Durchflußkanal (6) umfaßt, angeschlossen sind, um in dieser zu prüfenden Rohrleitung bzw. in diesem zu prüfenden Rohrleitungennetz einen Druck P anzulegen,
- Mittel zum Messen (13) und zum Kontrollieren (24) des Drucks P,
- Mittel (18) zum Messen der Temperatur T in der Rohrleitung bzw. im Rohrleitungennetz,
- im vorkommenden Fall, Mittel (22) zum Messen der Durchflußmenge des zur Aufrechterhaltung des Drucks P in der zu prüfenden Rohrleitung bzw. im zu prüfenden Rohrleitungennetz von den Erzeugungsmitteln (12) zugeführten, gasförmigen Mediums,
- eine Verarbeitungseinheit (25) für die durchgeführten Druck-, Temperatur- und Durchflußmengenmessungen, umfaßt.

3. Anlage nach Anspruch 2, dadurch gekennzeichnet, daß die Gasmediumzufuhrmittel (9) aus einem Zufuhrrohr (11) bestehen, das an seinen Enden Anschlußmittel (10, 10A) umfaßt, die geeignet sind, mit den dem wenigstens einen der Verschlußmittel (5, 5A, 5B) entsprechenden Anschlußmitteln bzw. den Anschlußmitteln der Mittel zum Erzeugen von unter Druck stehendem, gasförmigem Medium (12) zusammenzuwirken.

4. Anlage nach Anspruch 3, dadurch gekennzeichnet, daß das Zufuhrrohr (11) Mittel (13) zum Messen des Drucks P, wie einen Druckgeber, sowie Mittel (18) zum Messen der Temperatur T umfaßt, die sich möglichst nahe der Anschlußmittel (10), die dazu bestimmt sind, mit dem wenigstens einen der Verschlußmittel (5, 5A, 5B) zusammenzuwirken, befinden.

5. Anlage nach einem der Ansprüche 3 oder 4, dadurch gekennzeichnet, daß das Zufuhrrohr (11) entweder in der Dicke seiner Wand oder in seinem inneren Teil ein elektrisches Anschlußkabel integriert, das im Bereich der Anschlußmittel (10 bzw. 10A) angebrachte männliche oder weibliche Verbindungsmittel (28, 29) verbindet, wobei die Verbindungsmittel (28) gemeinsame Verbindungsmittel (31, 32) aufnehmen, die den Mitteln (13) zum Messen des Drucks P und den Mitteln (18) zum Messen der Temperatur T entsprechen, und die Verbindungsmittel (29) mit gemeinsame Verbindungsmitteln (33) zusammenwirken, die fest mit einem mit der Verarbeitungseinheit (25) verbundenen Anschlußkabel verbunden sind.

6. Anlage nach iregendeinem der Ansprüche 2 bis 5, dadurch gekennzeichnet, daß die Mittel zum Messen der Durchflußmenge (22), wie ein Durchflußmesser, sowie ein Druckgeber (24) am Ausgang der Mittel zum Erzeugen von unter Druck stehendem, gasförmigem Medium (12) angebracht sind.

7. Anlage nach Ansprüchen 2 und 6, dadurch gekennzeichnet, daß sie ein Zentralgehäuse (23) umfaßt, das die Mittel zum Erzeugen von unter Druck stehendem, gasförmigem Medium (12), die Mittel zum Messen der Durchflußmenge (22), den Druckgeber (24), die Verarbeitungseinheit (25), Mittel (26) zur Anzeige der von der Verarbeitungseinheit (25) erhaltenen Ergebnisse, sowie Mittel (35) zum Anschluß an eine externe, elektrische Stromversorgung integriert.

8. Anlage nach Anspruch 7, dadurch gekennzeichnet, daß das Zentralgehäuse (23) außerdem Mittel zur Durchführung einer Wasserdichtigkeitsprobe integriert, die Mittel (26) zum Anschluß an eine externe Wasserversorgung, eine Schleife (37) zum Messen der zur Aufrechterhaltung eines Drucks P in der zu prüfenden Rohrleitung bzw. im zu prüfenden Rohrleitungennetz erforderlichen Wasserzufuhr-Durchflußmenge, und Mittel zum Zuführen von Wasser zu dieser Rohrleitung bzw. zu diesem Rohrleitungennetz, die vom Zufuhrrohr (11) gebildet sind, umfassen.

9. Anlage nach Anspruch 7, dadurch gekennzeichnet, daß das Zentralgehäuse (23) einen Preßluftgenerator (34), der das Aufblasen der die Verschlußmittel (5, 5A, 5B) bildenden Luftballone sichert, und Mittel (21) zum Anschluß an außerhalb dieses Zentralgehäuses (23) befindliche Mittel zum Erzeugen von unter Druck stehendem, gasförmigem Medium, enthält.

## Claims

1. Process for testing the tightness of a pipe or a pipe network consisting in delimiting through obturating means said pipe or said pipe network to be tested and in injecting into same a gaseous medium until reaching a pressure P, characterized in that:
- the pressure P is maintained constant through supplying gaseous fluid into said pipe or said pipe network to be tested,
- the flow rate of the gaseous-fluid supply necessary to maintain said pressure P is measured,
- said pressure P is lower than 0,1·10⁵ Pa and preferably between 0,03·10⁵ Pa and 0,07·10⁵ Pa.

2. Installation allowing the implementation of the process according to claim 1, characterized in that it includes, in combination:
- means (5, 5A, 5B) for obturating the pipe or the pipe network to be tested,
- means (12) for generating gaseous fluid under pressure co-operating with supplying means (9) connected to at least one of the obturating means (5) including a channel (6) for the flowing through of gaseous fluid, in order to create a pressure P in this pipe or this pipe network to be tested,
- means for measuring (13) and controlling (24) the pressure P,
- means (18) for measuring the temperature T inside the pipe or the pipe network,
- should the case arise, means (22) for measuring the flow rate of the gaseous-fluid supply necessary to maintain the pressure P in the pipe or the pipe network to be tested,
- a processing unit (25) for the pressure, temperature and flow-rate measurings carried out.

3. Installation according to claim 2, characterized in that the gaseous-fluid supplying-means (9) are formed by a feed-in pipe (11) including, at its ends, connecting means (10, 10A) capable of co-operating with the connecting means corresponding to the at least one of the obturating means (5, 5A, 5B) and the connecting means of the means (12) for generating gaseous fluid under pressure, respectively.

4. Installation according to claim 3, characterized in that the feed-in pipe (11) includes means (13) for measuring the pressure P, such as a pressure detector, as well as means (18) for measuring the temperature T, which are located as close as possible to the connecting means (10) aimed at co-operating with the at least one of the obturating means (5, 5A, 5B).

5. Installation according to one of claims 3 or 4, characterized in that the feed-in pipe (11) integrates, either in the thickness of its wall or in its internal portion, an electrical connecting wire connecting male or female connecting means (28, 29) installed at the level of the connecting means (10 or 10A, respectively), the connecting means (28) receiving combined connecting means (31, 32) corresponding to the means (13) for measuring the pressure P and to the means (18) for measuring the temperature T and the connecting means (29) co-operating with combined connecting means (33) integral with a connecting cable connected to the processing unit (25).

6. Installation according to any one of claims 2 to 5, characterized in that the means for measuring the flow rate (22), such as a flow gauge, as well as a pressure detector (24) are installed at the outlet of the means (12) for generating gaseous fluid under pressure.

7. Installation according to claims 2 and 6, characterized in that it includes a central casing (23) integrating the means (12) for generating gaseous fluid under pressure, the means for measuring the flow rate (22), the pressure detector (24), the processing unit (25), means (26) for displaying the results obtained through the processing unit (25), as well as means (35) for the connection to an external electric-current supply.

8. Installation according to claim 7, characterized in that the central casing (23) in addition integrates means for implementing a water-tightness test including means (26) for the connection to an external water supply, a loop (37) for measuring the flow rate of the water supply necessary to maintain a pressure P in the pipe or in the pipe network to be tested, and means for supplying this pipe or this pipe network with water, formed by the feed-in pipe (11).

9. Installation according to claim 7, characterized in that the central casing (23) contains a compressed-air generator (34) ensuring the inflation of the balloons forming the obturating means (5, 5A, 5B) and means (21) for the connection to means for generating gaseous fluid under pressure located outside this central casing (23).
